(19) Europäisches Patentamt
European Patent Office
Office européen des brevets

(11) EP 2 243 368 A2

(12) EUROPÄISCHE PATENTANMELDUNG

(43) Veröffentlichungstag:
**27.10.2010 Patentblatt 2010/43**

(21) Anmeldenummer: **10158929.9**

(22) Anmeldetag: **09.05.2001**

(51) Int Cl.:
***A01N 43/824*** (2006.01) ***A01N 43/836*** (2006.01)
***A01N 43/82*** (2006.01) ***A01P 13/02*** (2006.01)
***A01N 25/32*** (2006.01) ***A01N 37/46*** (2006.01)
***A01N 39/02*** (2006.01) ***A01N 43/18*** (2006.01)
***A01N 43/42*** (2006.01) ***A01N 43/50*** (2006.01)
***A01N 43/54*** (2006.01) ***A01N 43/76*** (2006.01)
***A01N 43/80*** (2006.01) ***A01N 43/86*** (2006.01)
***A01N 43/90*** (2006.01) ***A01N 47/36*** (2006.01)
***A01N 47/38*** (2006.01) *A01N 25/32* (2006.01)
*A01N 37/46* (2006.01) *A01N 39/02* (2006.01)
*A01N 43/42* (2006.01) *A01N 43/50* (2006.01)
*A01N 43/54* (2006.01) *A01N 43/76* (2006.01)
*A01N 43/80* (2006.01) *A01N 43/86* (2006.01)
*A01N 43/90* (2006.01) *A01N 47/36* (2006.01)
*A01N 47/38* (2006.01)

(84) Benannte Vertragsstaaten:
**AT BE CH CY DE DK ES FI FR GB GR IE IT LI LU MC NL PT SE TR**
Benannte Erstreckungsstaaten:
**LT RO SI**

(30) Priorität: **22.05.2000 DE 10025306**
**24.08.2000 DE 10041619**

(62) Dokumentnummer(n) der früheren Anmeldung(en) nach Art. 76 EPÜ:
**05005219.0 / 1 552 746**
**01943335.8 / 1 298 996**

(71) Anmelder: **Bayer CropScience AG**
**40789 Monheim (DE)**

(72) Erfinder:
- **Feucht, Dieter, Dr.**
  **65760 Eschborn (DE)**
- **Dahmen, Peter, Dr.**
  **41470 Neuss (DE)**
- **Drewes, Mark, Dr.**
  **40764 Langenfeld (DE)**
- **Pontzen, Rolf, Dr.**
  **42799 Leichlingen (DE)**
- **Kremer, Mathias, Dr.**
  **1000 San Jose (CR)**

Bemerkungen:
Diese Anmeldung ist am 01-04-2010 als Teilanmeldung zu der unter INID-Code 62 erwähnten Anmeldung eingereicht worden.

(54) **Selektive Herbizide auf Basis von Heteroaryloxy-acetamiden**

(57) Die Erfindung betrifft neue herbizide, synergistische Wirkstoffkombinationen, die aus Heteroaryloxyacetamiden einerseits und bekannten, sowie herbizid wirksamen Verbindungen und/oder Safenern, die in der Beschreibung aufgelistet sind, andererseits bestehen und mit besonders gutem Erfolg zur selektiven Unkrautbekämpfung in verschiedenen Nutzpflanzenkulturen verwendet werden können.

EP 2 243 368 A2

## Beschreibung

Die Erfindung betrifft neue selektiv-herbizide, synergistische Wirkstoffkombinationen, die aus bekannten Heteroaryloxy-acetamiden einerseits und bekannten, herbizid wirksamen Verbindungen und/oder die Kulturpflanzen-Verträglichkeit verbessernden Verbindungen andererseits bestehen und mit besonders gutem Erfolg zur selektiven Unkrautbekämpfung in verschiedenen Nutzpflanzenkulturen verwendet werden können.

Heteroaryloxyacetamide sind als starke, besonders gegen monokotyle Unkräuter wirksame Herbizide Gegenstand einer Reihe von Patentanmeldungen (vgl. EP-A 5501, EP-A 18497, EP-A 29171, EP-A 94514, EP-A 100044, EP-A 100045, EP-A 161602, EP-A 195237, EP-A 348734, EP-A 348737, DE-A 4317323). Die Wirkung dieser Verbindungen und/oder ihre Verträglichkeit gegenüber Kulturpflanzen sind jedoch nicht immer ganz zufriedenstellend.

Weiter sind Wirkstoffkombinationen aus Heteroaryloxy-acetamiden und anderen herbizid wirksamen Verbindungen zum Erzielen einer synergistischen Wirkung (vgl. WO-A 94/02014, WO-A-96/07323, WO-A-96/11575, WO-A-96/17519, WO-A-98/08383, vgl. auch US-A-5858920, US-A-5945379, US-A-5985797) bzw. aus Heteroaryloxy-acetamiden und Verbindungen, welche die Kulturpflanzen-Verträglichkeit von Herbiziden verbessern können (vgl. DE-A 3418167, vgl. auch US-A-5858920) bekannt geworden. Auch bei diesen Kombinationsprodukten sind jedoch die Anwendungseigenschaften nicht immer vollständig befriedigend.

Überraschenderweise wurde nun gefunden, dass eine Reihe von bekannten Wirkstoffen aus der Reihe der Heteroaryloxy-acetamide bei gemeinsamer Anwendung mit bekannten herbizid wirksamen Verbindungen aus verschiedenen Stoffklassen und/oder die Kulturpflanzen-Verträglichkeit verbessernden Verbindungen ausgesprochen synergistische Effekte hinsichtlich der Wirkung gegen Unkräuter zeigen und/oder die Kulturpflanzen-Verträglichkeit signifikant verbessern und besonders vorteilhaft als breit wirksame Kombinationspräparate zur selektiven Bekämpfung von Unkräutern in Nutzpflanzenkulturen, wie z.B. in Baumwolle, Gerste, Mais, Kartoffeln, Raps, Reis, Soja, Sonnenblumen, Weizen und Zuckerrohr verwendet werden können.

Gegenstand der Erfindung sind selektiv-herbizide Mittel, gekennzeichnet durch einen wirksamen Gehalt an einer Wirkstoffkombination bestehend aus

(a) einem Heteroaryloxy-acetamid der allgemeinen Formel (I)

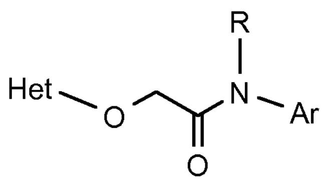

(I)

in welcher

Ar für gegebenenfalls durch Halogen, $C_1$-$C_4$-Alkyl oder $C_1$-$C_4$-Halogenalkyl substituiertes Phenyl steht,

Het für Thiadiazolyl steht, welches durch Halogen oder durch jeweils gegebenenfalls durch Halogen substituiertes $C_1$-$C_4$-Alkyl oder Phenyl substituiert ist, und

R für Alkyl, Alkenyl oder Alkinyl mit jeweils bis zu 4 Kohlenstoffatomen steht,

("Wirkstoffe der Gruppe 1 ") und

(b) einer oder mehrerer Verbindungen aus einer zweiten Gruppe von Herbiziden, welche die nachstehend genannten Wirkstoffe enthält:

1H-1,2,4-triazol-3-amin (Amitrole), 2-[2,4-Dichlor-5-(2-propinyloxy)-phenyl]-5,6,7,8-tetrahydro-1,2,4-triazolo-[4,3-a]-pyridin-3(2H)-on (Azafenidin), N-(4,6-Dimethoxy-pyrimidin-2-yl)-N'-[1-methyl-4-(2-methyl-2H-tetrazol-5-yl)-1H-pyrazol-5-ylsulfonyl]-harnstoff (Azimsulfuron), N-Benzyl-2-(4-fluor-3-trifluormethyl-phenoxy)-butanamid (Beflubutamid), N-Butyl-N-ethyl-2,6-dinitro-4-trifluormethyl-benzenamin (Benfluralin), 2-[2-[4-(3,6-Dihydro-3-methyl-2,6-dioxo-4-trifluormethyl-1 (2H)-pyrimidinylphenoxy]methyl]-5-ethyl-phenoxy-propansäure-methylester (Benzfendizone), 3-(2-Chlor-4-methylsulfonyl-benzoyl)-4-phenylthio-bicyclo-[3.2.1]-oct-3-en-2-on (Benzobicyclon), 2-Chlor-5-(3,6-dihydro-3-methyl-2,6-dioxo-4-trifluormethyl-1(2H)-pyrimidinyl)-benzoesäure-[1,1-dimethyl-2-oxo-2-(2-propenyloxy)]-ethylester (Butafenacil-allyl), 2-(1-Ethoximino-propyl)-3-hydroxy-5-[2,4,6-trimethyl-3-(1-oxo-butyl)-phenyl]-2-cyclohexen-1-on (Butroxydim), 2-[1-[(3-Chlor-2-propenyl)-oxy-imino]-propyl]-3-hydroxy-5-(tetrahydro-2H-pyran-4-yl)-2-cyclohexen-1-on (Caloxydim, Tepraloxydim), 2-Chlor-3-[2-chlor-5-(1,3,4,5,6,7-hexahydro-1,3-dioxo-2H-isoindol-2-yl)-phenyl]-2-propansäure-ethylester (Cinidon-ethyl), 2-[1-[2-(4-Chlor-phenoxy)]-propoxyaminobutyl]-5-(tetrahydro-2H-thiopyran-3-yl)-1,3-cyclohexandion (Clefoxydim), (E,E)-(+)-2-[1-[[(3-Chlor-2-propenyl)-oxy]-imino]-propyl]-3-hydroxy-2-cyclohexen-1-on (Clethodim), 3-chloro-2-[[(5-ethoxy-7-fluoro[1,2,4]triazolo[1,5-c]pyrimidin-2-yl) sulfonyl]amino]-benzoesäuremethylester (Cloransulam-methyl), 2-(1-Ethoximinobutyl)-3-hydroxy-5-(tetrahydro-2H-thiopyran-3-yl)-2-cyclohexen-1-on (Cycloxydim), N-(2,6-Dichlor-phenyl)-5-ethoxy-7-fluor-[1,2,4]-triazolo-[1,5-c]-pyrimidin-2-sulfonamid (Diclosulam), 2-[1-[(3,5-Difluor-phenyl)-amino-carbonyl-hydrazono]-ethyl]-pyridin-3-carbonsäure (Diflufenzopyr), (S)-2-Chlor-N-(2,4-dimethyl-3-thienyl)-N-(2-methoxy-1-methyl-ethyl)-acetamid (Dimethenamid-P), 2-[2-(3-Chlor-phenyl)-oxiranylmethyl]-2-ethyl-1H-inden-1,3(2H)-dion (Epropodan), (R)-Ethyl-2-[4-(6-chlor-benzoxazol-2-yl-oxy)-phenoxy]-propanoat (Fenoxaprop-P-ethyl), N-(2,6-Difluor-phenyl)-8-fluor-5-methoxy-[1,2,4]-triazolo-[1,5-c]-pyrimidin-2-sulfonamid (Florasulam), (R)-2-[4-(5-Trifluormethyl-pyridin-2-yl-oxy)-phenoxy]-propansäure-butylester (Fluazifop-P-butyl), 4,5-Dihydro-3-methoxy-4-methyl-5-oxo-N-[(2-trifluormethoxy-phenyl)-sulfonyl]-1H-1,2,4-triazol-1-carboxamid-Natriumsalz (Flucarbazone-sodium), Ethyl-[2-chloro-4-fluoro-5-(5-methyl-6-oxo-4-trifluoromethyl-1(6H)-pyridazinyl)-phenoxy]-acetate (Flufenpyr), 2-[7-Fluor-3,4-dihydro-3-oxo-4-(2-propinyl)-2H-1,4-benzoxaz!n-6-y!]-4,5,6,7-tetrahydro-1H-isoindol-1,3-dion (Flumioxazin), N-(4,6-Dimethoxy-pyrimidin-2-yl)-N'-(3-methoxycarbonyl-6-trifluormethyl-pyridin-2-yl-sulfonyl)-harnstoff-Natriumsalz (Flupyrsulfuron-methyl-sodium), 2-[[[[(4,6-Dimethoxy-2-pyrimidinyl)-amino]-carbonyl]-amino]-sulfonyl]-4-formylamino-N,N-dimethyl-benzamid (Foramsulfuron), (R)-2-[4-(3-Chlor-5-trifluormethyl-pyridin-2-yl-oxy)-phenoxy]-propansäure (-methylester, -2-ethoxy-ethylester, - butylester) (Haloxyfop, -methyl, -P-methyl, -ethoxyethyl, -butyl), 2-[4,5-dihydro-4-methyl-4-(1-methylethyl)-5-oxo-1H-imidazol-2-yl]-5-(methoxymethyl)-3-pyridincarbonsäure (Imazamox), N-(4-Methoxy-6-methyl-1,3,5-triazin-2-yl)-N'-(5-iod-2-methoxycarbonyl-phenylsulfonyl)-harnstoff-Natriumsalz (lodosulfuronme- thyl-sodium), (4-Chlor-2-methylsulfonyl-phenyl)-(5-cyclopropyl-isoxazol-4-yl)-methanon (Isoxachlortole), 2-[[[[(4,6-Dimethoxy-2-pyrimidinyl)-amino]-carbonyl]-amino]-sulfonyl]-4-[[(methylsulfonyl)-amino]methyl]-benzoesäure-methylester (Mesosulfuron), 2-(4-Methylsulfonyl-2-nitro-benzoyl)-1,3-cyclohexandion (Mesotrione), 3-[1-(3,5-Dichlor-phenyl)-1-i-propyl]-2,3-dihydro-6-methyl-5-phenyl-4H-1,3-oxazin-4-on (Oxaziclomefone), 2-Chlor-1-(3-ethoxy-4-nitro-phenoxy)-4-trifluormethyl-benzen (Oxyfluorfen), 2-(2,2-Difluor-ethoxy)-N-(5,8-dimethoxy[1,2,4]triazolo[1,5-c]pyrimidin-2-yl)-6-trifluormethyl-benzolsulfonamid (Penoxsulam), 2-Chloro-N-(2-ethoxy-ethyl)-N-(2-methyl-1-phenyl-1-propenyl)-acetamide (Pethoxamid), 2-[[[(4,5-Dihydro-4-methyl-5-oxo-3-propoxy-1H-1,2,4-triazol-1-yl)-carbonyl]-amino]-sulfonyl]-benzoesäure-methylester-Natriumsalz (Procarbazone-sodium), 1-Chlor-N-[2-chlor-4-fluor-5-[(6S,7aR)-6-fluor-tetrahydro-1,3-dioxo-1H-pyrrolo[1,2-c]imidazol-2(3H)-yl]-phenyl]-methansulfonamid (Profluazol), (R)-[2-[[(1-Methyl-ethyliden)-amino]-oxy]-ethyl]-2-[4-(6-chlor-2-chinoxalinyloxy)-phenoxy]-propanoat (Propaquizafop), 2-Chlor-N-(2-ethyl-6-methyl-phenyl)-N-[(1-methyl-ethoxy)-methyl]-acetamid (Propisochlor), 1-(3-Chlor-4,5,6,7-tetrahydropyrazolo[1,5-a]pyridin-2-yl)-5-(methyl-2-propinylamino)-1H-pyrazol-4-carbonitril (Pyraclonil), Ethyl [2-Chloro-5-(4-chloro-5-difluoromethoxy-1-methyl-1H-pyrazol-3-yl)-4-fluoro-phenoxy]-acetate (Pyraflufen-ethyl), 6-Chlor-3-phenyl-pyridazin-4-ol (Pyridatol), 7-[(4,6-Dimethoxy-2-pyrimidinyl)-thio]-3-methyl-1(3H)-isobenzofuranon (Pyriftalid), 2-(4,6-Dimethoxy-pyrimidin-2-yl-oxy)-benzoesäure-methylester (Pyriminobac-methyl), 2-Chlor-6-(4,6-dimethoxy-pyrimidin-2-ylthio)-benzoesäure-Natriumsalz (Pyrithiobac-sodium), 3,7-Dichlor-chinolin-8-carbonsäure (Quinchlorac), (R)-2-[4-(6-Chlor-2-chinoxalinyloxy)-phenoxy]-propansäure (-ethylester, -tetrahydro-2-furanyl-methylester) (Quizalofop-P-ethyl, -P-tefuryl), 2-Difluormethyl-5-(4,5-dihydro-thiazol-2-yl)-4-(2-methyl-propyl)-6-trifluormethyl-pyridin-3-carbonsäuremethylester (Thiazopyr), (3,5,6-Trichlor)-pyridin-2-yl-oxy-essigsäure (Triclopyr), N-[[(4,6-Dimethoxy-2-pyrimidinyl)-amino]-carbonyl]-3-(2,2,2-trifluor-ethoxy)-2-pyridinsulfonamid-Natriumsalz (Trifloxysulfuron), N-[4-Dimethylamino-6-(2,2,2-trifluor-ethoxy)-1,3,5-triazin-2-yl]-N'-(2-methoxycarbonyl-phenylsulfonyl)-harnstoff (Triflusulfuron-methyl), N-[[(4,6-Dimethoxy-2-pyrimidinyl)-amino]-carbonyl]-3-(N-methyl-N-methylsulfonyl-amino])-2-pyridinsulfonamid (vgl. WO-A-92/10660),
("Wirkstoffe der Gruppe 2")
sowie gegebenenfalls zusätzlich

(c) einer die Kulturpflanzen-Verträglichkeit verbessernde Verbindung aus der folgenden Gruppe von Verbindungen:
4-Dichloracetyl-1-oxa-4-aza-spiro[4.5]-decan (AD-67), 1-Dichloracetyl-hexahydro-3,3,8a-trimethylpyrrolo[1,2-a]-pyrimidin-6(2H)-on (Dicyclonon, BAS-145138), 4-Dichloracetyl-3,4-dihydro-3-methyl-2H-1,4-benzoxazin (Benoxacor), 5-Chlor-chinolin-8-oxy-essigsäure-(1-methyl-hexylester) (Cloquintocet-mexyl), α-(Cyanomethoximino)-phenylacetonitril (Cyometrinil), 2,2-Dichlor-N-(2-oxo-2-(2-propenylamino)-ethyl)-N-(2-propenyl)-acetamid (DKA-24), 2,2-Dichlor-N,N-di-2-propenyl-acetamid (Dichlormid), N-(4-Methylphenyl)-N'-(1-methyl-1-phenyl-ethyl)-harnstoff (Dymron), 4,6-Dichlor-2-phenyl-pyrimidin (Fenclorim), 1-(2,4-Dichlor-phenyl)-5-trichlormethyl-1H-1,2,4-triazol-3-carbonsäure-ethylester (Fenchlorazol-ethyl), 2-Chlor-4-trifluormethyl-thiazol-5-carbonsäure-phenylmethylester (Flurazole), 4-Chlor-N-(1,3-dioxolan-2-yl-methoxy)-α-trifluor-acetophenonoxim (Fluxofenim), 3-Dichloracetyl-5-(2-furanyl)-2,2-dimethyl-oxazolidin (Furilazole, MON-13900), Ethyl-4,5-dihydro-5,5-diphenyl-3-isoxazolcarboxylat (Isoxadifen-ethyl), Diethyl-1-(2,4-dichlorphenyl)-4,5-dihydro-5-methyl-1H-pyrazol-3,5-dicarboxylat (Mefenpyr-diethyl), 2-Dichlormethyl-2-methyl-1,3-dioxolan (MG-191), 1,8-Naphthalsäureanhydrid, α-(1,3-Dioxolan-2-yl-methoximino)-phenylacetonitril (Oxabetrinil), 2,2-Dichlor-N-(1,3-dioxolan-2-yl-methyl)-N-(2-propenyl)-acetamid (PPG-1292), 3-Dichloracetyl-2,2-dimethyl-oxazolidin (R-28725), 3-Dichloracetyl-2,2,5-trimethyl-oxazolidin (R-29148), 1-(2-Chlorphenyl)-5-phenyl-1H-pyrazol-3-carbonsäure-methylester und N-(2-Methoxybenzoyl)-4-[(methylamino-carbonyl)-amino]-benzolsulfonamid ("Wirkstoffe der Gruppe 3").

Bevorzugte Bedeutungen der in der vorstehend gezeigten Formel (I) aufgeführten Reste werden im folgenden erläutert.

Ar steht bevorzugt für gegebenenfalls durch Fluor, Chlor, Brom, Methyl, Ethyl oder Trifluormethyl substituiertes Phenyl.

Het steht bevorzugt für 1,2,4-Thiadiazolyl oder 1,3,4-Thiadiazolyl, welches durch Fluor, Chlor, Brom oder durch jeweils gegebenenfalls durch Fluor und/oder Chlor substituiertes Methyl, Ethyl, n- oder i-Propyl oder Phenyl substituiert ist.

R steht bevorzugt für Methyl, Ethyl, n- oder i-Propyl, n-, i-, s- oder t-Butyl, 2-Propenyl, 1-Methyl-2-propenyl, 2-Butenyl, 2-Propinyl, 1-Methyl-2-propinyl, 2-Butinyl.

Ar steht besonders bevorzugt für gegebenenfalls durch Fluor, Chlor, Brom, Methyl oder Trifluormethyl substituiertes Phenyl.

Het steht besonders bevorzugt für 1,2,4-Thiadiazolyl oder 1,3,4-Thiadiazolyl, welches durch Fluor, Chlor, Brom oder durch jeweils gegebenenfalls durch Fluor und/oder Chlor substituiertes Methyl, Ethyl oder Phenyl substituiert ist.

R steht besonders bevorzugt für Methyl, Ethyl, n- oder i-Propyl, n-, i-, s- oder t-Butyl, 2-Propenyl, 1-Methyl-2-propenyl, 2-Butenyl, 2-Propinyl, 1-Methyl-2-propinyl, 2-Butinyl.

Ar steht ganz besonders bevorzugt für gegebenenfalls durch Fluor oder Chlor substituiertes Phenyl.

Het steht ganz besonders bevorzugt für 1,3,4-Thiadiazolyl, welches durch Chlor, Brom oder durch Fluor- und/oder Chlor-substituiertes Methyl substituiert ist.

R steht ganz besonders bevorzugt für Methyl, Ethyl, n- oder i-Propyl, n-, i-, s-oder t-Butyl.

Als Beispiele für die als erfindungsgemäße Mischungspartner zu verwendenden Verbindungen der Formel (I) seien genannt:

N-i-Propyl-N-phenyl-α-(5-trifluormethyl-1,3,4-thiadiazol-2-yl-oxy)-acetamid, N-i-Propyl-N-(2-chlor-phenyl)-α-(5-trifluormethyl-1,3,4-thiadiazol-2-yl-oxy)-acetamid, N-i-Propyl-N-(3-chlor-phenyl)-α-(5-trifluormethyl-1,3,4-thiadiazol-2-yl-oxy)-acetamid, N-i-Propyl-N-(4-chlor-phenyl)-α-(5-trifluormethyl-1,3,4-thiadiazol-2-yl-oxy)-acetamid, N-i-Propyl-N-(2-fluor-phenyl)-α-(5-trifluormethyl-1,3,4-thiadiazol-2-yl-oxy)-acetamid, N-i-Propyl-N-(3-fluor-phenyl)-α-(5-trifluormethyl-1,3,4-thiadiazol-2-yl-oxy)-acetamid, N-i-Propyl-N-(4-fluor-phenyl)-α-(5-trifluormethyl-1,3,4-thiadiazol-2-yl-oxy)-acetamid.

Die Verbindung N-i-Propyl-N-(4-fluor-phenyl)-α-(5-trifluormethyl-1,3,4-thiadiazol-2-yl-oxy)-acetamid (Flufenacet) - im Folgenden als Verbindung (I-1) bezeichnet - sei als Mischungskomponente der Formel (I) besonders hervorgehoben.

Die Verbindungen der Formel (I) sind in den oben angegebenen Patentanmeldungen bzw. Patentschriften beschrieben.

Die Wirkstoffe der Gruppe 2 können ihrer chemischen Struktur entsprechend folgenden Wirkstoffklassen zugeordnet werden:

Amide (z.B. Beflubutamid), Arylheterocyclen (z.B. Azafenidin, Benzfendizone, Butafenacil-allyl, Cinidon-ethyl, Fluazolate, Flumioxazin, Oxaziclomefone, Profluazol, Pyraflufen-ethyl, Pyridatol), Aryloxyphenoxypropionate (z.B. Fenoxaprop-P-ethyl, Fluazifop-P-butyl, Haloxyfop-P-methyl, Quizalofop-P-ethyl), Carbonsäurederivate (z.B. Quinclorac, Triclopyr), Chloracetamide (z.B. Dimethenamid-P, Propisochlor), Cyclohexandione (z.B. Butroxydim, Clefoxydim, Cycloxydim), Dinitroaniline (z.B. Benfluralin, Oryzalin), Imidazolinone (z.B. Imazamox), Isoxazole (z.B. Isoxachlortole), Pyridine (z.B. Thiazopyr), Pyrimidinyl(thio)benzoate (z.B. Pyribenzoxim, Pyriftalid, Pyriminobac-methyl, Pyrithiobac-sodium), Sulfonylharnstoffe (z.B. Azimsulfuron, Flupyrsulfuron-methyl-sodium, Foramsulfuron, Iodosulfuron-methyl-sodium, Mesosulfuron, Trifloxysulfuron, Triflusulfuron-methyl), Tetrazolinone (z.B. Fentrazamide), Triazole (z.B. Amitrole), Triazolinone (z.B. Flucarbazone-sodium, Procarbazone-sodium), Triazolopyrimidine (z.B. Cloransulam-methyl, Diclosulam, Florasulam), Triketone (z.B. Mesotrione).

Als Mischungskomponenten aus den Wirkstoffen der Gruppe 2 seien besonders hervorgehoben:

Azimsulfuron, Beflubutamid, Butafenacil-allyl, Cinidon-ethyl, Cloransulam-methyl, Clefoxydim, Diclosulam, Fenoxaprop-P-ethyl, Florasulam, Flupyrsulfuron-methyl-sodium, Foramsulfuron, Imazamox, Iodosulfuron-methyl-sodium, Isoxachlortole, Mesosulfuron, Oxaziclomefone, Procarbazone-sodium, Pyriftalid, Pyrithiobac-sodium, Quinclorac, Trifloxysulfuron.

Aus dieser Gruppe ist Beflubutamid als Mischungskomponente von ganz besonderem Interesse.

Aus dieser Gruppe ist weiter Butafenacil-allyl als Mischungskomponente von ganz besonderem Interesse.

Aus dieser Gruppe ist weiter Cinidon-ethyl als Mischungskomponente von ganz besonderem Interesse.

Aus dieser Gruppe ist weiter Clefoxydim als Mischungskomponente von ganz besonderem Interesse.

Aus dieser Gruppe ist weiter Cloransulam-methyl als Mischungskomponente von ganz besonderem Interesse.

Aus dieser Gruppe ist weiter Diclosulam als Mischungskomponente von ganz besonderem Interesse.

Aus dieser Gruppe ist weiter Florasulam als Mischungskomponente von ganz besonderem Interesse.

Aus dieser Gruppe ist Flupyrsulfuron-methyl-sodium als Mischungskomponente von ganz besonderem Interesse.

Aus dieser Gruppe ist weiter Foramsulfuron als Mischungskomponente von ganz besonderem Interesse.

Aus dieser Gruppe ist weiter Imazamox als Mischungskomponente von ganz besonderem Interesse.

Aus dieser Gruppe ist weiter Iodosulfuron-methyl-sodium als Mischungskomponente von ganz besonderem Interesse.

Aus dieser Gruppe ist weiter Isoxachlortole als Mischungskomponente von ganz besonderem Interesse.

Aus dieser Gruppe ist weiter Mesosulfuron als Mischungskomponente von ganz besonderem Interesse.

Aus dieser Gruppe ist weiter Oxaziclomefone als Mischungskomponente von ganz besonderem Interesse.

Aus dieser Gruppe ist weiter Procarbazone-sodium als Mischungskomponente von ganz besonderem Interesse.

Aus dieser Gruppe ist weiter Trifloxysulfuron als Mischungskomponente von ganz besonderem Interesse.

Vorzugsweise enthalten die erfindungsgemäßen Mittel einen oder zwei Wirkstoffe der Gruppe 1, ein bis drei Wirkstoffe der Gruppe 2 und gegebenenfalls einen Wirkstoff der Gruppe 3.

Insbesondere enthalten die erfindungsgemäßen Mittel einen Wirkstoff der Gruppe 1, einen oder zwei Wirkstoffe der Gruppe 2 und gegebenenfalls einen Wirkstoff der Gruppe 3.

Es wurde nun überraschend gefunden, dass die oben definierten Wirkstoffkombinationen aus den Heteroaryloxy-acetamiden der Formel (I) und den oben angeführten Wirkstoffen der Gruppe 2 bei weitgehend guter NutzpflanzenVerträglichkeit eine besonders hohe herbizide Wirksamkeit aufweisen und in verschiedenen Kulturen, insbesondere in Gerste, Kartoffeln, Mais, Reis, Soja und Weizen zur selektiven Bekämpfung von monokotylen und dikotylen Unkräutern

verwendet werden können und dass sie auch zur Bekämpfung von monokotylen und dikotylen Unkräutern im semi- und nicht-selektiven Bereich verwendet werden können.

Überraschenderweise ist die herbizide Wirksamkeit der erfindungsgemäßen Wirkstoffkombinationen aus Verbindungen der oben aufgeführten Gruppen 1 und 2 erheblich höher als die Summe der Wirkungen der einzelnen Wirkstoffe.

Es liegt somit ein nicht vorhersehbarer synergistischer Effekt vor und nicht nur eine Wirkungsergänzung. Die neuen Wirkstoffkombinationen sind in vielen Kulturen gut verträglich, wobei die neuen Wirkstoffkombinationen auch sonst schwer bekämpfbare Unkräuter gut bekämpfen. Die neuen Wirkstoffkombinationen stellen somit eine wertvolle Bereicherung der Herbizide dar.

Der synergistische Effekt der erfindungsgemäßen Wirkstoffkombinationen ist bei bestimmten Konzentrationsverhältnissen besonders stark ausgeprägt. Jedoch können die Gewichtsverhältnisse der Wirkstoffe in den Wirkstoffkombinationen in relativ großen Bereichen variiert werden. Im allgemeinen entfallen auf 1 Gewichtsteil Wirkstoff der Formel (I) 0,01 bis 1000 Gewichtsteile, vorzugsweise 0,02 bis 500 Gewichtsteile und besonders bevorzugt 0,05 bis 100 Gewichtsteile Wirkstoff oder Wirkstoffe der Gruppe 2.

Als Mischungskomponenten aus den Wirkstoffen der Gruppe 3 werden besonders hervorgehoben:

5-Chlor-chinolin-8-oxy-essigsäure-(1-methyl-hexylester) (Cloquintocet-mexyl), Ethyl-4,5-dihydro-5,5-diphenyl-3-isoxazolcarboxylat (Isoxadifen-ethyl) und Diethyl-1-(2,4-dichlor-phenyl)-4,5-dihydro-5-methyl-1H-pyrazol-3,5-dicarboxylat (Mefenpyr-diethyl) zur Verbesserung der Verträglichkeit in Getreide, sowie 4-Dichloracetyl-1-oxa-4-azaspiro [4.5]-decan (AD-67), 1-Dichloracetyl-hexahydro-3,3,8a-trimethylpyrrolo[1,2-a]-pyrimidin-6(2H)-on (BAS-145138), 4-Dichloracetyl-3,4-dihydro-3-methyl-2H-1,4-benzoxazin (Benoxacor), 2,2-Dichlor-N,N-di-2-propenyl-acetamid (Dichlormid), 2,2-Dichlor-N-(2-oxo-2-(2-propenylamino)-ethyl)-N-(2-propenyl)-acetamid (DKA-24), 3-Dichloracetyl-5-(2-furanyl)-2,2-dimethyl-oxazolidin (Furilazole, MON-13900), 3-Dichloracetyl-2,2,5-trimethyl-oxazolidin (R-29148) zur Verbesserung der Verträglichkeit in Mais.

Als Beispiele für die erfindungsgemäßen Wirkstoffkombinationen - gegebenenfalls auch mit Safenern - seien genannt:

Flufenacet + Azimsulfuron, Flufenacet + Beflubutamid, Flufenacet + Beflubutamid + Mefenpyr-diethyl, Flufenacet + Beflubutamid + Cloquintocet-mexyl, Flufenacet + Butafenacil-allyl, Flufenacet + Cinidon-ethyl, Flufenacet + Clefoxydim, Flufenacet + Diclosulam, Flufenacet + Fenoxaprop-P-ethyl + Mefenpyr-diethyl, Flufenacet + Florasulam, Flufenacet + Florasulam + Mefenpyr-diethyl, Flufenacet + Florasulam + Cloquintocet-mexyl, Flufenacet + Flupyrsulfuron-methyl-sodium, Flufenacet + Flupyrsulfuron-methyl-sodium + Mefenpyr-diethyl, Flufenacet + Flupyrsulfuron-methyl-sodium + Cloquintocet-mexyl, Flufenacet + Foramsulfuron, Flufenacet + Foramsulfuron + Mefenpyr-diethyl, Flufenacet + Foramsulfuron + Cloquintocet-mexyl, Flufenacet + Foramsulfuron + Benoxacor, Flufenacet + Foramsulfuron + Dichlormid, Flufenacet + Foramsulfuron + R-29148, Flufenacet + Foramsulfuron + AD-67, Flufenacet + Imazamox, Flufenacet + Iodosulfuron-methyl-sodium, Flufenacet + Iodosulfuron-methyl-sodium + Mefenpyr-diethyl, Flufenacet + Iodosulfuron-methyl-sodium + Cloquintocet-mexyl, Flufenacet + Isoxachlortole, Flufenacet + Mesosulfuron, Flufenacet + Oxaziclomefone, Flufenacet + Procarbazone-sodium, Flufenacet + Procarbazone-sodium + Mefenpyr-diethyl, Flufenacet + Procarbazone-sodium + Cloquintocet-mexyl, Flufenacet + Pyriftalid, Flufenacet + Pyrithiobac-sodium, Flufenacet + Quinclorac, Flufenacet + Trifloxysulfuron.

Es ist als überraschend anzusehen, dass aus einer Vielzahl von bekannten Safenern oder Antidots, die befähigt sind, die schädigende Wirkung eines Herbizids auf die Kulturpflanzen zu antagonisieren, gerade die oben aufgeführten Verbindungen der Gruppe 3 geeignet sind, die schädigende Wirkung von Wirkstoffen der Formel (I) und deren Salzen, gegebenenfalls auch in Kombination mit einem oder mehreren der oben angeführten Wirkstoffe der Gruppe 2, auf die Kulturpflanzen annähernd vollständig aufzuheben, ohne dabei die herbizide Wirksamkeit gegenüber den Unkräutern zu beeinträchtigen.

Die folgende Wirkstoffe der Gruppe 3 erwiesen sich erfindungsgemäß auch ohne Zusatz eines Wirkstoffes der Gruppe 2 als hervorragend geeignet, die Kulturpflanzenverträglichkeit der Wirkstoffe der Formel (I) zu erhöhen:

1-Dichloracetyl-hexahydro-3,3,8a-trimethylpyrrolo[1,2-a]-pyrimidin-6(2H)-on (Dicyclonon, BAS-145138), Ethyl-4,5-dihydro-5,5-diphenyl-3-isoxazolcarboxylat (Isoxadifen-ethyl), Diethyl-1-(2,4-dichlorphenyl)-4,5-dihydro-5-methyl-1H-pyrazol-3,5-dicarboxylat (Mefenpyr-diethyl), 3-Dichloracetyl-2,2-dimethyl-oxazolidin (R-28725), 3-Dichloracetyl-2,2,5-trimethyl-oxazolidin (R-29148) und 1-(2-Chlor-phenyl)-5-phenyl-1H-pyrazol-3-carbonsäure-methylester.

Der vorteilhafte Effekt der Kulturpflanzenverträglichkeit der erfindungsgemäßen Wirkstoffkombinationen ist bei bestimmten Konzentrationsverhältnissen ebenfalls besonders stark ausgeprägt. Jedoch können die Gewichtsverhältnisse der Wirkstoffe in den Wirkstoffkombinationen in relativ großen Bereichen variiert werden. Im allgemeinen entfallen auf 1 Gewichtsteil Wirkstoff der Formel (I) oder dessen Mischungen mit Wirkstoffen der Gruppe 2 0,001 bis 1000 Gewichtsteile, vorzugsweise 0,01 bis 100 Gewichtsteile und besonders bevorzugt 0,1 bis 10 Gewichtsteile Wirkstoff oder Wirkstoffe der Gruppe 3.

Erfindungsgemäß können alle Pflanzen und Pflanzenteile behandelt werden. Unter Pflanzen werden hierbei alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Pflanzenteile und Organe der Pflanzen, wie Spross, Blatt, Blüte und Wurzel verstanden werden, wobei beispielhaft Blätter, Nadeln, Stengel, Stämme, Blüten, Fruchtkörper, Früchte und Samen sowie Wurzeln, Knollen und Rhiozome aufgeführt werden. Zu den Pflanzenteilen gehört auch vegetatives und generatives Vermehrungsmaterial, beispielsweise Stecklinge, Knollen, Rhizome, Ableger und Samen.

Die erfindungsgemäße Behandlung der Pflanzen und Pflanzenteile mit den Wirkstoffen erfolgt direkt oder durch Einwirkung auf deren Umgebung, Lebensraum oder Lagerraum nach den üblichen Behandlungsmethoden, z.B. durch Tauchen, Sprühen, Verdampfen, Vernebeln, Streuen, Aufstreichen und bei Vermehrungsmaterial, insbesondere bei Samen weiterhin durch ein- oder mehrschichtiges Umhüllen.

Unter den durch biotechnologische und gentechnologische Methoden oder durch Kombination dieser Methoden erhaltenen Pflanzen werden solche Pflanzen hervorgehoben, die sog. 4-HPPD-, EPSP- und/oder PPO-Hemmstoffe tolerieren, wie z.B. Acuron-Pflanzen.

Die erfindungsgemäßen Wirkstoffe können z.B. bei den folgenden Pflanzen verwendet werden:

<u>Dikotyle Unkräuter der Gattungen:</u> Abutilon, Amaranthus, Ambrosia, Anoda, Anthemis, Aphanes, Atriplex, Bellis, Bidens, Capsella, Carduus, Cassia, Centaurea, Chenopodium, Cirsium, Convolvulus, Datura, Desmodium, Emex, Erysimum, Euphorbia, Galeopsis, Galinsoga, Galium, Hibiscus, Ipomoea, Kochia, Lamium, Lepidium, Lindernia, Matricaria, Mentha, Mercurialis, Mullugo, Myosotis, Papaver, Pharbitis, Plantago, Polygonum, Portulaca, Ranunculus, Raphanus, Rorippa, Rotala, Rumex, Salsola, Senecio, Sesbania, Sida, Sinapis, Solanum, Sonchus, Sphenoclea, Stellaria, Taraxacum, Thlaspi, Trifolium, Urtica, Veronica, Viola, Xanthium.

<u>Dikotyle Kulturen der Gattungen:</u> Arachis, Beta, Brassica, Cucumis, Cucurbita, Helianthus, Daucus, Glycine, Gossypium, Ipomoea, Lactuca, Linum, Lycopersicon, Nicotiana, Phaseolus, Pisum, Solanum, Vicia.

<u>Monokotyle Unkräuter der Gattungen:</u> Aegilops, Agropyron, Agrostis, Alopecurus, Apera, Avena, Brachiaria, Bromus, Cenchrus, Commelina, Cynodon, Cyperus, Dactyloctenium, Digitaria, Echinochloa, Eleocharis, Eleusine, Eragrostis, Eriochloa, Festuca, Fimbristylis, Heteranthera, Imperata, Ischaemum, Leptochloa, Lolium, Monochoria, Panicum, Paspalum, Phalaris, Phleum, Poa, Rottboellia, Sagittaria, Scirpus, Setaria, Sorghum.

<u>Monokotyle Kulturen der Gattungen:</u> Allium, Ananas, Asparagus, Avena, Hordeum, Oryza, Panicum, Saccharum, Secale, Sorghum, Triticale, Triticum, Zea.

Die Verwendung der erfindungsgemäßen Wirkstoffkombinationen ist jedoch keineswegs auf diese Gattungen beschränkt, sondern erstreckt sich in gleicher Weise auch auf andere Pflanzen.

Die erfindungsgemäß zu verwendenden Wirkstoffkombinationen können sowohl in konventionellen Anbauverfahren (Reihenkulturen mit geeigneter Reihenweite) in Plantagenkulturen (z.B. Wein, Obst, Zitrus) sowie in Industrie- und Gleisanlagen, auf Wegen und Plätzen, aber auch zur Stoppelbehandlung und beim Minimum-Tillage-Verfahren eingesetzt werden. Sie eignen sich weiterhin als Abbrenner (Krautabtötung z.B. in Kartoffeln) oder als Defoliantien (z.B. in Baumwolle). Ferner sind sind sie für den Einsatz auf Bracheflächen geeignet. Weitere Einsatzgebiete sind Baumschulen, Forst, Grünland und Zierpflanzenbau.

Die Wirkstoffkombinationen können in die üblichen Formulierungen übergeführt werden, wie Lösungen, Emulsionen, Spritzpulver, Suspensionen, Pulver, Stäubemittel, Pasten, lösliche Pulver, Granulate, Suspensions-Emulsions-Konzentrate, Wirkstoff-imprägnierte Natur- und synthetische Stoffe sowie Feinstverkapselungen in polymeren Stoffen.

Diese Formulierungen werden in bekannter Weise hergestellt, z.B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone wie Aceton, Methylethylketon, Methylisobutylketon oder Cyclohexanon, stark polare Lösungsmittel, wie Dimethylformamid und Dimethylsulfoxid, sowie Wasser.

Als feste Trägerstoffe kommen in Frage:

z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate, als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstängeln; als Emulgier- und/oder schaumerzeugende Mittel kommen in Frage: z.B. nichtionogene und anionische Emulgatoren, wie Polyoxyethylen-FettsäureEster, Polyoxyethylen-Fettalkohol-Ether, z.B. Alkylarylpolyglykolether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent an Wirkstoffen, vorzugsweise zwischen 0,5 und 90 %.

Die erfindungsgemäßen Wirkstoffkombinationen werden im allgemeinen in Form von Fertigformulierungen zur Anwendung gebracht. Die in den Wirkstoffkombinationen enthaltenen Wirkstoffe können aber auch in Einzelformulierungen bei der Anwendung gemischt, d.h. in Form von Tankmischungen zur Anwendung gebracht werden.

Die neuen Wirkstoffkombinationen können als solche oder in ihren Formulierungen weiterhin auch in Mischung mit anderen bekannten Herbiziden Verwendung finden, wobei wiederum Fertigformulierungen oder Tankmischungen möglich sind. Auch eine Mischung mit anderen bekannten Wirkstoffen, wie Fungiziden, Insektiziden, Akariziden, Nematiziden, Schutzstoffen gegen Vogelfraß, Wuchsstoffen, Pflanzennährstoffen und Bodenstrukturverbesserungsmitteln ist möglich. Für bestimmte Anwendungszwecke, insbesondere im Nachauflauf-Verfahren, kann es ferner vorteilhaft sein, in die Formulierungen als weitere Zusatzstoffe pflanzenverträgliche mineralische oder vegetabilische Öle (z.B. das Handelspräparat "Oleo DuPont 11E") oder Ammoniumsalze wie z.B. Ammoniumsulfat oder Ammoniumrhodanid aufzunehmen.

Die neuen Wirkstoffkombinationen können als solche, in Form ihrer Formulierungen oder der daraus durch weiteres Verdünnen bereiteten Anwendungsformen, wie gebrauchsfertige Lösungen, Suspensionen, Emulsionen, Pulver, Pasten und Granulate angewandt werden. Die Anwendung geschieht in üblicher Weise, z.B. durch Gießen, Spritzen, Sprühen, Stäuben oder Streuen.

Die erfindungsgemäßen Wirkstoffkombinationen können vor und nach dem Auflaufen der Pflanzen appliziert werden, also im Vorauflauf und Nachauflauf-Verfahren. Sie können auch vor der Saat in den Boden eingearbeitet werden.

Ein synergistischer Effekt liegt bei Herbiziden immer dann vor, wenn die herbizide Wirkung der Wirkstoffkombination größer ist als die der einzelnen applizierten Wirkstoffe.

Die zu erwartende Wirkung für eine gegebene Kombination zweier Herbizide kann wie folgt berechnet werden (vgl. COLBY, S.R.: "Calculating synergistic and antagonistic responses of herbicide combinations", Weeds 15, Seiten 20 - 22, 1967):

Wenn

$X$ = % Schädigung durch Herbizid A (Wirkstoff der Formel I) bei p kg/ha Aufwandmenge

und

$Y$ = % Schädigung durch Herbizid B (Wirkstoff der Formel II) bei q kg/ha Aufwandmenge

und

E = die erwartete Schädigung der Herbizide A und B bei p und q kg/ha Aufwandmenge,

dann ist

$$E = X + Y - (X * Y/100).$$

Ist die tatsächliche Schädigung größer als berechnet, so ist die Kombination in ihrer Wirkung überadditiv, das heißt, sie zeigt einen synergistischen Effekt.

Die Wirkstoffkombinationen der vorliegenden Erfindung weisen in der Tat die Eigenschaft auf, dass ihre gefundene herbizide Wirkung stärker ist als die berechnete, das heißt, dass die neuen Wirkstoffkombinationen synergistisch wirken.

## Patentansprüche

**1.** Mittel enthaltend einen wirksamen Gehalt an einer Wirkstoffkombination bestehend aus

(a) einem Heteroaryloxy-acetamid der allgemeinen Formel (I)

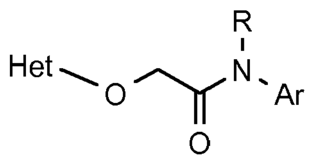
(I)

in welcher

Ar für gegebenenfalls durch Halogen, $C_1$-$C_4$-Alkyl oder $C_1$-$C_4$-Halogenalkyl substituiertes Phenyl steht,
Het für Thiadiazolyl steht, welches durch Halogen oder durch jeweils gegebenenfalls durch Halogen substituiertes $C_1$-$C_4$-Alkyl oder Phenyl substituiert ist, und
R für Alkyl, Alkenyl oder Alkinyl mit jeweils bis zu 4 Kohlenstoffatomen steht,

("Wirkstoffe der Gruppe 1 ") und
(b) einer oder mehrerer Verbindungen aus einer zweiten Gruppe von Herbiziden, welche die nachstehend genannten Wirkstoffe enthält:
2-[[[(4,5-Dihydro-4-methyl-5-oxo-3-propoxy-1H-1,2,4-triazol-1-yl)-carbonyl]-amino]-sulfonyl]-benzoesäuremethylester-Natriumsalz (Procarbazone-sodium), 1H-1,2,4-triazol-3-amin (Amitrole), 2-[2,4-Dichlor-5-(2-propinyloxy)-phenyl]-5,6,7,8-tetrahydro-1,2,4-triazolo-[4,3-a]-pyridin-3(2H)-on (Azafenidin), N-(4,6-Dimethoxy-pyrimidin-2-yl)-N'-[1-methyl-4-(2-methyl-2H-tetrazol-5-yl)-1H-pyrazol-5-ylsulfonyl]-harnstoff (Azimsulfuron), N-Benzyl-2-(4-fluor-3-trifluormethyl-phenoxy)-butanamid (Beflubutamid), N-Butyl-N-ethyl-2,6-dinitro-4-trifluormethylbenzenamin (Benfluralin), 2-[2-[4-(3,6-Dihydro-3-methyl-2,6-dioxo-4-trifluormethyl-1(2H)-pyrimidinylphenoxy]methyl]-5-ethyl-phenoxypropansäure-methylester (Benzfendizone), 3-(2-Chlor-4-methylsulfonylbenzoyl)-4-phenylthio-bicyclo-[3.2.1]-oct-3-en-2-on (Benzobicyclon), 2-Chlor-5-(3,6-dihydro-3-methyl-2,6-dioxo-4-trifluormethyl-1(2H)-pyrimidinyl)-benzoesäure-[1,1-dimethyl-2-oxo-2-(2-propenyloxy)]-ethylester (Butafenacil-allyl), 2-(1-Ethoximino-propyl)-3-hydroxy-5-[2,4,6-trimethyl-3-(1-oxo-butyl)-phenyl]-2-cydohexen-1-on (Butroxydim), 2-[1-[(3-Chlor-2-propenyl)-oxy-imino]-propyl]-3-hydroxy-5-(tetrahydro-2H-pyran-4-yl)-2-cyclohexen-1-on (Caloxydim, Tepraloxydim), 2-Chlor-3-[2-chlor-5-(1,3,4,5,6,7-hexahydro-1,3-dioxo-2H-isoindol-2-yl)-phenyl]-2-propansäure-ethylester (Cinidon-ethyl), 2-[1-[2-(4-Chlor-phenoxy)]-propoxyaminobutyl]-5-(tetrahydro-2H-thiopyran-3-yl)-1,3-cyclohexandion (Clefoxydim), (E,E)-(+)-2-[1-[[(3-Chlor-2-propenyl)-oxy]-imino]-propyl]-3-hydroxy-2-cyclohexen-1-on (Clethodim), 3-chloro-2-[[(5-ethoxy-7-fluoro[1,2,4]triazolo[1,5-c]pyrimidin-2-yl) sulfonyl]amino]-benzoesäuremethylester (Cloransulam-methyl), 2-(1-Ethoximinobutyl)-3-hydroxy-5-(tetrahydro-2H-thiopyran-3-yl)-2-cyclohexen-1-on (Cycloxydim), N-(2,6-Dichlorphenyl)-5-ethoxy-7-fluor-[1,2,4]-triazolo-[1,5-c]-pyrimidin-2-sulfonamid (Diclosulam), 2-[1-[(3,5-Difluor-phenyl)-amino-carbonyl-hydrazono]-ethyl]-pyridin-3-carbonsäure (Diflufenzopyr), (S)-2-Chlor-N-(2,4-dimethyl-3-thienyl)-N-(2-methoxy-1-methyl-ethyl)-acetamid (Dimethenamid-P), 2-[2-(3-Chlor-phenyl)-oxiranylmethyl]-2-ethyl-1H-inden-1,3(2H)-dion (Epropodan), (R)-Ethyl-2-[4-(6-chlor-benzoxazol-2-yl-oxy)-phenoxy]-propanoat (Fenoxaprop-P-ethyl), N-(2,6-Difluorphenyl)-8-fluor-5-methoxy-[1,2,4]-triazolo-[1,5-c]-pyrimidin-2-sulfonamid (Florasulam), (R)-2-[4-(5-Trifluormethyl-pyridin-2-yl-oxy)-phenoxy]-propansäure-butylester (Fluazifop-P-butyl), 4,5-Dihydro-3-methoxy-4-methyl-5-oxo-N-[(2-trifluormethoxy-phenyl)-sulfonyl]-1H-1,2,4-triazol-1-carboxamid-Natriumsalz (Flucarbazone-sodium), Ethyl-[2-chloro-4-fluoro-5-(5-methyl-6-oxo-4-trifluoromethyl-1 (6H)-pyridazinyl)-phenoxy]-acetate (Flufenpyr), 2-[7-Fluor-3,4-dihydro-3-oxo-4-(2-propinyl)-2H-1,4-benzoxazin-6-yl]-4,5,6,7-tetrahydro-1H-isoindol-1,3-dion (Flumioxazin), N-(4,6-Dimethoxy-pyrimidin-2-yl)-N'-(3-methoxycarbonyl-6-trifluormethyl-pyridin-2-yl-sulfonyl)-harnstoff-Natriumsalz (Flupyrsulfuron-methyl-sodium), 2-[[[[(4,6-Dimethoxy-2-pyrimidinyl)-amino]-carbonyl]-amino]-sulfonyl]-4-formylamino-N,N-dimethyl-benzamid (Foramsulfuron), (R)-2-[4-(3-Chlor-5-trifluormethyl-pyridin-2-yl-oxy)-phenoxy]-propansäure (-methylester, -2-ethoxy-ethylester, - butylester) (Haloxyfop, -methyl, -P-methyl, -ethoxyethyl, -butyl), 2-[4,5-dihydro-4-methyl-4-(1-methylethyl)-5-oxo-1H-imidazol-2-yl]-5-(methoxymethyl)-3-pyridincarbonsäure (Imazamox), (4-Chlor-2-methylsulfonyl-phenyl)-(5-cyclopropyl-isoxazol-4-yl)-methanon (Isoxachlortole), 2-[[[[(4,6-Dimethoxy-2-pyrimidinyl)-amino]-carbonyl]-amino]-sulfonyl]-4-[[(methylsulfonyl)-amino]methyl]-benzoesäure-methylester (Mesosulfuron), 2-(4-Methylsulfonyl-2-nitro-benzoyl)-1,3-cyclohexandion (Mesotrione), 3-[1-(3,5-Dichlor-phenyl)-1-i-propyl]-2,3-dihydro-6-methyl-5-phenyl-4H-1,3-oxazin-4-on (Oxaziclomefone), 2-Chlor-1-(3-ethoxy-4-nitro-phenoxy)-4-trifluormethyl-benzen (Oxyfluorfen), 2-(2,2-Difluor-ethoxy)-N-(5,8-dimethoxy[1,2,4]triazolo[1,5-c]pyrimidin-2-yl)-6-trifluormethyl-benzolsulfonamid (Penoxsulam), 2-Chloro-N-(2-ethoxy-ethyl)-N-(2-methyl-1-phenyl-1-propenyl)-acetamide (Pethoxamid), 1-Chlor-N-[2-chlor-4-fluor-5-[(6S,7aR)-6-fluor-tetrahydro-1,3-dioxo-1H-pyrrolo[1,2-c]imidazol-2(3H)-yl]-phenyl]-methansulfonamid (Profluazol), (R)-[2-[[(1-Methyl-ethyliden)-amino]-oxy]-ethyl]-2-[4-(6-chlor-2-chinoxalinyloxy)-phenoxy]-propanoat (Propaquizafop), 2-Chlor-N-(2-ethyl-6-methylphenyl)-N-[(1-methyl-ethoxy)-methyl]-acetamid (Propisochlor), 1-(3-Chlor-4,5,6,7-tetrahydropyrazolo[1,5-a]pyridin-2-yl)-5-(methyl-2-propinylamino)-1H-pyrazol-4-carbonitril (Pyraclonil), Ethyl [2-Chloro-5-(4-chloro-5-difluoromethoxy-1-methyl-1H-pyrazol-3-yl)-4-fluorophenoxy]-acetate (Pyraflufen-ethyl), 6-Chlor-3-phenyl-pyridazin-4-ol (Pyridatol), 7-[(4,6-Dimethoxy-2-pyrimidinyl)-thio]-3-methyl-1(3H)-isobenzofuranon (Pyriftalid), 2-(4,6-Dimethoxy-pyrimidin-2-yl-oxy)-benzoesäure-methylester (Pyriminobac-methyl), 2-Chlor-6-(4,6-dimethoxy-pyrimidin-2-ylthio)-benzoesäure-Natriumsalz (Pyrithiobac-sodium), 3,7-Dichlor-chinolin-8-carbonsäure (Quinchlorac), (R)-2-[4-(6-Chlor-2-chinoxalinyloxy)-phenoxy]-propansäure (-ethylester, -tetrahydro-2-furanyl-methylester) (Quizalofop-P-ethyl, -P-tefuryl), 2-Difluormethyl-5-(4,5-dihydro-thiazol-2-yl)-4-(2-methyl-propyl)-6-trifluormethyl-pyridin-3-carbonsäure-methylester (Thiazopyr), (3,5,6-Trichlor)-pyridin-2-yl-oxy-essigsäure (Triclopyr), N-[[(4,6-Dimethoxy-2-pyrimidinyl)-amino]-carbonyl]-3-(2,2,2-trifluor-ethoxy)-2-pyridinsulfonamid-Natriumsalz (Trifloxysulfuron), N-[4-Dimethylamino- 6-(2,2,2- trifluor- ethoxy)- 1,3,5- triazin- 2- yl]-N'-(2- methoxycarbonylphenylsulfonyl)-harnstoff (Triflusulfuron-methyl), N-[[(4,6-Dimethoxy-2-pyrimidinyl)-amino]-carbonyl]-3-(N-methyl-N-methylsulfonyl-amino])-2-pyridinsulfonamid (vgl. WO-A-92/10660),
("Wirkstoffe der Gruppe 2")
sowie gegebenenfalls zusätzlich
(c) einer die Kulturpflanzen-Verträglichkeit verbessernde Verbindung aus der folgenden Gruppe von Verbindungen: 4-Dichloracetyl-1-oxa-4-aza-spiro[4.5]-decan (AD-67), 1-Dichloracetylhexahydro-3,3,8a-trimethylpyrrolo[1,2-a]-pyrimidin-6(2H)-on (Dicyclonon, BAS-145138), 4-Dichloracetyl-3,4-dihydro-3-methyl-2H-1,4-benzoxazin (Benoxacor), 5-Chlor-chinolin-8-oxy-essigsäure-(1-methyl-hexylester) (Cloquintocet-mexyl), α-(Cyanomethoximino)-phenylacetonitril (Cyometrinil), 2,2-Dichlor-N-(2-oxo-2-(2-propenylamino)-ethyl)-N-(2-propenyl)-acetamid (DKA-24), 2,2-Dichlor-N,N-di-2-propenyl-acetamid (Dichlormid), N-(4-Methyl-phenyl)-N'-(1-methyl-1-phenyl-ethyl)-harnstoff (Dymron), 4,6-Dichlor-2-phenyl-pyrimidin (Fenclorim), 1-(2,4-Dichlor-phenyl)-5-trichlormethyl-1H-1,2,4-triazol-3-carbonsäure-ethylester (Fenchlorazol-ethyl), 2-Chlor-4-trifluormethyl-thiazol-5-carbonsäure-phenylmethylester (Flurazole), 4-Chlor-N-(1,3-dioxolan-2-yl-methoxy)-α-trifluor-acetophenonoxim (Fluxofenim), 3-Dichloracetyl-5-(2-furanyl)-2,2-dimethyl-oxazolidin (Furilazole, MON-13900), Ethyl-4,5-dihydro-5,5-diphenyl-3-isoxazolcarboxylat (Isoxadifen-ethyl), Diethyl-1-(2,4-dichlorphenyl)-4,5-dihydro-5-methyl-1H-pyrazol-3,5-dicarboxylat (Mefenpyr-diethyl), 2-Dichlormethyl-2-methyl-1,3-dioxolan (MG-191), 1,8-Naphthalsäureanhydrid, α-(1,3-Dioxolan-2-yl-methoximino)-phenylacetonitril (Oxabetrinil), 2,2-Dichlor-N-(1,3-dioxolan-2-yl-methyl)-N-(2-propenyl)-acetamid (PPG-1292), 3-Dichloracetyl-2,2-dimethyl-oxazolidin (R-28725), 3-Dichloracetyl-2,2,5-trimethyl-oxazolidin (R-29148), 1-(2-Chlor-phenyl)-5-phenyl-1H-pyrazol-3-carbonsäuremethylester und N-(2-Methoxy-benzoyl)-4-[(methylamino-carbonyl)-amino]-benzolsulfonamid ("Wirkstoffe der Gruppe 3").

2. Mittel nach Anspruch 1, **dadurch gekennzeichnet, dass** in der Formel (I)

   Ar für gegebenenfalls durch Fluor, Chlor, Brom, Methyl, Ethyl oder Trifluormethyl substituiertes Phenyl steht, Het für 1,2,4-Thiadiazolyl oder 1,3,4-Thiadiazolyl steht, welches durch Fluor, Chlor, Brom oder durch jeweils gegebenenfalls durch Fluor und/oder Chlor substituiertes Methyl, Ethyl, n- oder i-Propyl oder Phenyl substituiert ist, und
   R für Methyl, Ethyl, n- oder i-Propyl, n-, i-, s- oder t-Butyl, 2-Propenyl, 1-Methyl-2-propenyl, 2-Butenyl, 2-Propinyl, 1-Methyl-2-propinyl, 2-Butinyl steht.

3. Mittel nach Anspruch 1, **dadurch gekennzeichnet, dass** das Heteroaryloxy-acetamid der allgemeinen Formel (I) die Verbindung N-i-Propyl-N-(4-fluorphenyl)-$\alpha$-(5-trifluormethyl-1,3,4-thiadiazol-2-yl-oxy)-acetamid (Flufenacet) ist.

4. Mittel nach einem der Ansprüche 1 bis 3, **dadurch gekennzeichnet, dass** die Verbindungen aus der zweiten Gruppe von Herbiziden (Komponente (b)) aus den nachstehend genannten Wirkstoffe ausgewählt sind:

   Procarbazone-sodium, Azimsulfuron, Beflubutamid, Butafenacil-allyl, Cinidon-ethyl, Clefoxydim, Cloransulam-methyl, Diclosulam, Fenoxaprop-P-ethyl, Florasulam, Flupyrsulfuron-methyl-sodium, Foramsulfuron, Imazamox, Isoxachlortole, Mesosulfuron, Oxaziclomefone, Pyriftalid, Pyrithiobac-sodium, Quinclorac, Trifloxysulfuron.

5. Mittel nach einem der Ansprüche 1 bis 4, **dadurch gekennzeichnet, dass** die Verbindung aus der zweiten Gruppe von Herbiziden (Komponente (b)) Procarbazone-sodium ist.

6. Mittel nach einem der Ansprüche 1 bis 5, **dadurch gekennzeichnet, dass** die die Kulturpflanzen-Verträglichkeit verbessernden Verbindungen (Komponente (c)) aus den nachstehend genannten Wirkstoffen ausgewählt sind: 5-Chlor-chinolin-8-oxy-essigsäure-(1-methyl-hexylester) (Cloquintocet-mexyl), Ethyl-4,5-dihydro-5,5-diphenyl-3-isoxazolcarboxylat (Isoxadifen-ethyl) und Diethyl-1-(2,4-dichlor-phenyl)-4,5-dihydro-5-methyl-1H-pyrazol-3,5-dicarboxylat (Mefenpyr-diethyl) zu Verbesserung der Verträglichkeit in Getreide, sowie 4-Dichloracetyl-1-oxa-4-aza-spiro [4.5]-decan (AD-67), 1-Dichloracetyl-hexahydro-3,3,8a-trimethylpyrrolo[1,2-a]-pyrimidin-6(2H)-on (BAS-145138), 4-Dichloracetyl-3,4-dihydro-3-methyl-2H-1,4-benzoxazin (Benoxacor), 2,2-Dichlor-N,N-di-2-propenyl-acetamid (Dichlormid), 2,2-Dichlor-N-(2-oxo-2-(2-propenylamino)-ethyl)-N-(2-propenyl)-acetamid (DKA-24), 3-Dichloracetyl-5-(2-furanyl)-2,2-dimethyl-oxazolidin (Furilazole, MON-13900), 3-Dichloracetyl-2,2,5-trimethyl-oxazolidin (R-29148).

7. Mittel nach einem der Ansprüche 1 bis 6, **dadurch gekennzeichnet, dass** auf einen Gewichtsteil Wirkstoff der Formel (I) 0,01 bis 1000 Gewichtsteile des Wirkstoffs oder der Wirkstoffe aus der zweiten Gruppe von Herbiziden (Komponente (b)) entfallen.

8. Mittel nach einem der Ansprüche 1 bis 6, **dadurch gekennzeichnet, dass** auf einen Gewichtsteil Wirkstoff der Formel (I) oder dessen Mischungen mit Wirkstoffen aus der zweiten Gruppe von Herbiziden (Komponente (b)) 0,001 bis 1000 Gewichtsteile des die die Kulturpflanzen-Verträglichkeit verbessernden Wirkstoffs oder der die Kulturpflanzen-Verträglichkeit verbessernden Wirkstoffe (Komponente (c)) entfallen.

9. Verwendung eines Mittels gemäß einem der Ansprüche 1 bis 8 zur Bekämpfung von unerwünschten Pflanzen.

10. Verfahren zur Bekämpfung von unerwünschten Pflanzen, **dadurch gekennzeichnet, dass** man Mittel gemäß einem der Ansprüche 1 bis 7 auf die unerwünschten Pflanzen und/oder ihren Lebensraum einwirken lässt.

11. Verfahren zur Herstellung eines herbiziden Mittels, **dadurch gekennzeichnet, dass** man ein Mittel gemäß einem der Ansprüche 1 bis 7 mit oberflächenaktiven Mitteln und/oder Streckmitteln vermischt.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 5501 A
- EP 18497 A
- EP 29171 A
- EP 94514 A
- EP 100044 A
- EP 100045 A
- EP 161602 A
- EP 195237 A
- EP 348734 A
- EP 348737 A
- DE 4317323 A
- WO 9402014 A
- WO 9607323 A
- WO 9611575 A
- WO 9617519 A
- WO 9808383 A
- US 5858920 A
- US 5945379 A
- US 5985797 A
- DE 3418167 A
- WO 9210660 A


### In der Beschreibung aufgeführte Nicht-Patentliteratur


- **COLBY, S.R.** Calculating synergistic and antagonistic responses of herbicide combinations. *Weeds,* 1967, vol. 15, 20-22